# EUROPÄISCHE PATENTSCHRIFT

(11) **EP 2 007 864 B1**
(45) Veröffentlichungstag und Bekanntmachung des Hinweises auf die Patenterteilung: **29.05.2013**
(21) Anmeldenummer: 07727827.3
(22) Anmeldetag: 05.04.2007
(51) Int. Cl.: C11D 3/39, C11D 17/00

(54) **UMHÜLLTE IMIDOPEROXOCARBONSÄURETEILCHEN**
SHEATHED IMIDO PEROXYCARBONATE ACID PARTICLE
PARTICULES ENROBÉES D'ACIDE IMIDOPEROXOCARBOXYLIQUE

(30) Priorität: 19.04.2006 DE 102006018344
(43) Veröffentlichungstag der Anmeldung: 31.12.2008
(73) Patentinhaber: Henkel AG & Co. KGaA, 40589 Düsseldorf (DE)
(72) Erfinder: SCHMIEDEL, Peter, 40599 Düsseldorf (DE); RYBINSKI, Wolfgang von, 40593 Düsseldorf (DE); KAISER, Heribert, 40223 Düsseldorf (DE); SUNDER, Matthias, 40593 Düsseldorf (DE); HÖLSKEN, Sören, 40589 Düsseldorf (DE); GUCKENBIEHL, Bernhard, 50769 Köln (DE)
(86) Internationale Anmeldenummer: PCT/EP2007/053359
(87) Internationale Veröffentlichungsnummer: WO 2007/118804

(56) Entgegenhaltungen:
- EP-B1- 0 510 761
- WO-A-95/30735
- WO-A-95/33817
- WO-A-02/074891
- WO-A-2004/110611
- US-A- 5 258 132

## Beschreibung

Die vorliegende Erfindung betrifft wässrige tensid- und bleichmittelhaltige Wasch- oder Reinigungsmittel enthaltend umhüllte Teilchen, die in ihrem Kern Imidoperoxo-carbonsäure enthalten und eine Umhüllung aus Paraffinwachs aufweisen.

Bei Wasch- und Reinigungsmitteln in flüssiger Form, insbesondere wenn sie Wasser enthalten aber auch wenn sie wasserfrei sind, kann es aufgrund von chemischer Inkompatibilität der einzelnen Inhaltsstoffe zu negativen Wechselwirkungen dieser Inhaltsstoffe untereinander und zur Abnahme ihrer Aktivität und damit zur Abnahme der Waschleistung des Mittels insgesamt kommen, auch wenn es nur relativ kurz gelagert wird. Diese Aktivitätsabnahme betrifft prinzipiell alle Waschmittelinhaltsstoffe, welche im Waschprozeß chemische Reaktionen ausführen, um zum Waschergebnis beizutragen, insbesondere Bleichmittel und Enzyme, obwohl auch tensidische oder sequestrierende Inhaltsstoffe, die für Lösungsvorgänge oder Komplexierungsschritte verantwortlich sind, insbesondere in Gegenwart der genannten chemisch reaktiven Inhaltsstoffe in flüssigen, insbesondere wäßrigen Systemen nicht unbegrenzt lagerstabil sind.

Die Phthalimidoperoxoalkansäuren, wie zum Beispiel 6-Phthalimidoperoxohexansäure (PAP) sind hocheffiziente Bleichmittel, sie sind jedoch in herkömmlichen Flüssigwaschmittelrezepturen chemisch besonders instabil. Zumeist zersetzen sie sich in solchen in wenigen Tagen vollständig. Selbst wenn diese flüssigen Mittel von möglichen Reaktionspartnern der Peroxocarbonsäure, wie ungesättigten Verbindungen, Aldehyden, Aminen, Chlorid etc., befreit werden, zersetzen sie sich dennoch in Gegenwart der Tenside, auch wenn diese nicht oxidativ angegriffen werden. Der Grund hierfür ist möglicherweise, daß die Phthalimidoperoxoalkansäuren zwar als nur gering wasserlösliche Feststoffe in dieser Form stabil sind, sich in Gegenwart von Tensiden jedoch auflösen, in gelöster Form hoch reaktiv sind und sich sowohl über eine bimolekulare Reaktion unter Abspaltung von Singulettsauerstoff als auch durch Hydrolyse zu der Phthalimidoalkansäure und H₂O₂ zersetzen. Letzteres ist insbesondere bei niedrigen Waschtemperaturen und in den auftretenden Konzentrationen jedoch praktisch nicht bleichaktiv, so daß als Ergebnis die Bleichwirkung des Mittels bei Lagerung verlorengeht.

Verschiedentlich ist vorgeschlagen worden, das Problem der mangelnden Stabilität von Peroxocarbonsäuren durch ein Coating zu lösen. Beispielsweise ist im europäischen Patent EP 0 510 761 B1 ein gecoatetes Bleichmittelgranulat beschrieben worden, welches als Umhüllungsmaterial Paraffin mit einem Schmelzpunkt im Bereich von 40 °C bis 50 °C in Abmischung mit bestimmten Additiven, ausgewählt aus Ethylen/Vinylacetat-Copolymeren, hydrierten Kolophonium-methylestern, Ethylacrylat/2-Ethylhexylacrylat-Copolymeren und deren Mischungen, aufweist. Aus der europäischen Patentanmeldung EP 0 436 971 A2 sind umhüllte Teilchen bekannt, die 45-65 Gew.-% eines festen bleichmittelhaltigen Kerns und 35-55 Gew.-% einer Umhüllungsschicht aufweisen, die Paraffinwachs mit einem Schmelzpunkt im Bereich von 40 °C bis 50 °C enthält. Imidoperoxocarbonsäuren sind dort unter den Bleichmitteln nicht aufgeführt. Es zeigte sich nun jedoch, daß das Aufbringen von Coatingmaterialien keineswegs immer zu einer Erhöhung der Stabilität gerade von Imidoperoxocarbonsäuren führt. Oftmals tritt durch ein Coating, selbst mit chemisch inerten Materialien, sogar eine Destabilisierung von PAP auf. Ein Coating, das bei der Anwendung des Mittels, welches die gecoateten Teilchen enthalten, löslich sein soll ist, in der Regel in einem wasserhaltigen Produkt nicht völlig diffusionsdicht gegen Wasser. Ein solches Coating kann daher zwar möglicherweise die Auflösung des PAP unterdrücken, nicht aber dessen Hydrolyse zu H₂O₂.

Zur Lösung des Problems ist verschiedentlich auch vorgeschlagen worden, nicht alle für ein gutes Wasch- beziehungsweise Reinigungsergebnis wünschenswerten Inhaltsstoffe gleichzeitig in ein flüssiges Mittel einzuarbeiten, sondern dem Anwender des Mittels mehrere Komponenten zur Verfügung zu stellen, die er erst kurz vor dem oder während des Wasch- beziehungsweise Reinigungsvorgangs zusammengeben soll und die jeweils nur miteinander verträgliche Inhaltsstoffe enthalten, welche erst unter den Anwendungsbedingungen gemeinsam zum Einsatz kommen. Das gemeinsame Dosieren mehrerer Komponenten wird im Vergleich zum Dosieren nur eines einzigen flüssigen Mittels jedoch vom Anwender oft als zu aufwendig empfunden.

WO 2004/110611 offenbart lagerstabile Bleichmittelzusammensetzungen auf Basis von Peroxycarbonsäuren.

Es besteht folglich immer noch das Problem, ein lagerstabiles flüssiges Mittel bereit zu stellen, das außerdem möglichst alle, auch miteinander unverträgliche, für ein gutes Wasch- beziehungsweise Reinigungsergebnis jedoch notwendige Inhaltsstoffe enthält.

Gegenstand der vorliegenden Erfindung, die hierzu einen Beitrag leisten will, ist ein wässriges tensid- und bleichmittelhaltiges flüssiges Wasch-oder Reinigungsmittel gemäß Anspruch 1.

Falls die Imidoperoxocarbonsäure bei Raumtemperatur nicht in fester Form vorliegt, kann sie in bekannter Weise unter Einsatz inerter Trägermaterialien in Teilchenform konfektioniert worden sein; vorzugsweise wird jedoch eine bei Raumtemperatur feste Imidoperoxocarbonsäure eingesetzt. Es kommen beispielsweise 4-Phthal-imidoperoxobutansäure, 5-Phthalimidoperoxopentansäure, 6-Phthalimidoperoxohexansäure, 7-Phthalimidoperoxoheptansäure, N,N'-terephthaloyl-di-6-aminoperoxohexansäure und Mischungen aus diesen in Betracht. Zu den bevorzugten Persäuren gehören die Phthalimidoperoxoalkansäuren, insbesondere 6-Phthalimidoperoxohexansäure (PAP). Vorzugsweise besteht der zu umhüllende Kern aus der Imidoperoxocarbonsäure; er ist in jedem Fall frei von Tensiden.

Der Imidoperoxocarbonsäurekern ist erfindungsgemäß mit Paraffinwachs, das in Bereich von 40°C bis 65°C schmilzt, umhüllt. Paraffinwachs stellt im allgemeinen ein komplexes Stoffgemisch ohne scharfen Schmelzpunkt dar. Zur Charakterisierung bestimmt man üblicherweise seinen Schmelzbereich durch Differential-Thermo-Analyse (DTA), wie in "The Analyst" 87 (1962), 420, beschrieben, und/oder seinen Erstarrungspunkt. Darunter versteht man die Temperatur, bei der geschmolzenes Material durch langsames Abkühlen aus dem flüssigen in den festen Zustand übergeht. Außerdem ist bevorzugt, wenn die Paraffine möglichst geringe flüchtige Anteile enthalten. Bevorzugte Paraffinwachse enthalten weniger als 1 Gew.-%, insbesondere weniger als 0,5 Gew.-% bei 110 °C und Normaldruck verdampfbare Anteile. Erfindungsgemäß besonders brauchbare Paraffinwachse können beispielsweise unter den Handelsbezeichnungen Lunaflex® der Firma Fuller sowie Deawax® der DEA Mineralöl AG bezogen werden. Zu den besonders bevorzugten Paraffinwachsen gehören solche, die im Bereich von über 50 °C bis 60 °C schmelzen.

Paraffin wird vorzugsweise in solchen Mengen auf die teilchenförmige Imidoperoxocarbonsäure aufgebracht, dass die umhüllten Imidoperoxocarbonsäureteilchen zu 2 Gew.-% bis 30 Gew.-%, insbesondere 5 Gew.-% bis 25 Gew.-% und besonders bevorzugt 7,5 Gew.-% bis 20 Gew.-% aus dem Umhüllungsmaterial bestehen. Die Durchmesser der umhüllten Peroxocarbonsäureteilchen liegen dabei vorzugsweise im Bereich von 100 µm bis 2000 µm, insbesondere 200 µm bis 1600 µm; man geht daher von entsprechend feinteiligerem Imidoperoxocarbonsäurematerial aus und überzieht es mit dem Paraffin. Man geht zur Herstellung erfindungsgemäß umhüllter Imidoperoxocarbonsäureteilchen so vor, dass man eine Wirbelschicht der zu umhüllenden Imidoperoxocarbonsäureteilchen mit einer Schmelze oder gegebenenfalls einer vorzugsweise wäßrigen Emulsion, Dispersion oder Aufschlämmung des Paraffins besprüht, falls vorhanden dabei das Wasser durch Verdampfen entfernt und/oder das geschmolzene Umhüllungsmaterial durch Abkühlen verfestigt und die umhüllten Imidoperoxocarbonsäureteilchen in im Prinzip üblicher Weise aus der Wirbelschicht austrägt. Bei der erfindungsgemäßen Umhüllung mit dem Paraffmwachs bevorzugt ist ein Schmelzcoating, bei dem das Paraffin auf eine Temperatur, die 5 °C bis 40 °C über seinem Schmelzpunkt liegt, erwärmt wird und auf Teilchen aus Imidoperoxocarbonsäure aufgebracht wird, die eine Temperatur unterhalb des Paraffin-Erstarrungspunktes aufweisen. Vorzugsweise werden sie durch das dann eine entsprechend niedrige Temperatur aufweisende Wirbelmittel gekühlt, so daß sich das Paraffinwachs auf den Imidoperoxocarbonsäureteilchen verfestigt. Auf die in EP 0 510 761 vorgesehenen Additive in der Paraffinumhüllung wird dabei verzichtet.

Das mit Paraffin umhüllte Imidoperoxocarbonsäureteilchen wird zur Herstellung flüssiger tensid- und wasserhaltiger Wasch- oder Reinigungsmittel verwendet.

Der pH-Wert erfindungsgemäßer flüssiger Mittel liegt zwischen 2 und 6, vorzugsweise zwischen 3 und 5,5 und besonders bevorzugt zwischen 3,5 und 5. Wasser kann in erfindungsgemäßen Mitteln gewünschtenfalls in Mengen bis zu 90 Gew.-%, insbesondere 20 Gew.-% bis 75 Gew.-%, enthalten sein; gegebenenfalls können diese Bereiche jedoch auch über- oder unterschritten werden.

Der Gehalt an Imidoperoxocarbonsäure beträgt in den erfindungsgemäßen Mitteln vorzugsweise 1 Gew.-% bis 25 Gew.-%, insbesondere 2 Gew.-% bis 20 Gew.-% und besonders bevorzugt 3 % bis 15 Gew.-%.

Neben Wasser, Tensid und den umhüllten Imidoperoxocarbonsäureteilchen kann ein erfindungsgemäßes flüssiges Wasch- oder Reinigungsmittel alle in solchen Mitteln üblichen Inhaltsstoffe, wie beispielsweise Lösungsmittel, Builder, Enzyme und weitere Hilfststoffe wie soil repellants, Verdickungsmittel, Farb- und Duftstoffe oder ähnliches enthalten.

In einer bevorzugten Ausführungsform enthält es nichtionische Tenside und/oder organische Lösungsmittel sowie gegebenenfalls anionische Tenside, kationische Tenside und/oder Amphotenside.

Als anionische Tenside werden bevorzugt Tenside vom Sulfonattyp, Alk(en)ylsulfate, alkoxylierte Alk(en)ylsulfate, Estersulfonate und/oder Seifen eingesetzt.

Als Tenside vom Sulfonat-Typ kommen vorzugsweise C₉-C₁₃-Alkylbenzolsulfonate, Olefinsulfonate, d. h. Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht.

Als Alk(en)ylsulfate werden die Alkali- und insbesondere die Natriumsalze der Schwefelsäurehalbester der C₁₀-C₁₈-Fettalkohole beispielsweise aus Kokosfettalkohol, Talgfettalkohol, Lauryl-, Myristyl-, Cetyl- oder Stearylalkohol oder der C₈-C₂₀-Oxoalkohole und diejenigen Halbester sekundärer Alkohole dieser Kettenlänge bevorzugt. Weiterhin bevorzugt sind Alk(en)ylsulfate der genannten Kettenlänge, welche einen synthetischen, auf petrochemischer Basis hergestellten geradkettigen Alkylrest enthalten. Aus waschtechnischem Interesse sind C₁₂-C₁₆-Alkylsulfate und C₁₂-C₁₅-Alkylsulfate sowie C₁₄-C₁₅-Alkylsulfate und C₁₄-C₁₆-Alkylsulfate insbesondere bevorzugt. Auch 2,3-Alkylsulfate, welche beispielsweise als Handelsprodukte der Shell Oil Company unter dem Namen DAN^{®} erhalten werden können, sind geeignete Aniontenside.

Auch die Schwefelsäuremonoester der mit 1 bis 6 Mol Ethylenoxid ethoxylierten geradkettigen oder verzweigten C₇-C₂₁-Alkohole, wie 2-methylverzweigte C₉-C₁₁-Alkohole mit im Durchschnitt 3,5 Mol Ethylenoxid (EO) oder C₁₂-C₁₈-Fettalkohole mit 1 bis 4 EO, sind geeignet. Sie werden in Waschmitteln aufgrund ihres hohen Schaumverhaltens üblicherweise nur in relativ geringen Mengen, beispielsweise in Mengen von 0 bis 5 Gew.-% eingesetzt.

Geeignet sind auch die Ester von α-Sulfofettsäuren (Estersulfonate), z.B. die α-sulfonierten Methylester der hydrierten Kokos-, Palmkern- oder Talgfettsäuren.

Als weitere anionische Tenside kommen insbesondere Seifen in Betracht. Geeignet sind insbesondere gesättigte Fettsäureseifen, wie die Salze der Laurinsäure, Myristinsäure, Palmitinsäure, Stearinsäure, hydrierten Erucasäure und Behensäure sowie insbesondere aus natürlichen Fettsäuren, z. B. Kokos-, Palmkern- oder Talgfettsäuren, abgeleitete Seifengemische. Insbesondere sind solche Seifengemische bevorzugt, die zu 50 bis 100 Gew.-% aus gesättigten C₁₂-C₂₄-Fettsäureseifen und zu 0 bis 50 Gew.-% aus Ölsäureseife zusammengesetzt sind.

Eine weitere Klasse von Aniontensiden ist die durch Umsetzung von Fettalkoholethoxylaten mit Natriumchloracetat in Gegenwart basischer Katalysatoren zugängliche Klasse der Ethercarbonsäuren. Sie haben die allgemeine Formel: RO-(CH₂-CH₂-O)ₚ-CH₂-COOH mit R = C₁-C₁₈ und p = 0,1 bis 20. Ethercarbonsäuren sind wasserhärteunempfindlich und weisen ausgezeichnete Tensideigenschaften auf.

Kationaktive Tenside enthalten den die Oberflächenaktivität bedingenden hochmolekularen hydrophoben Rest bei Dissoziation in wässriger Lösung im Kation. Wichtigste Vertreter der Kationtenside sind die quartären Ammoniumverbindungen der allgemeinen Formel: (R¹R²R³R⁴N⁺) X⁻. Dabei steht R₁ für C₁-C₈-Alk(en)yl, R² bis R⁴ unabhängig voneinander für CₙH₂ₙ₊₁₋ₚ₋ₓ-(Y¹(CO)R⁵)ₚ-(Y²H)ₓ, wobei n für ganze Zahlen ohne 0 steht und p und x für ganze Zahlen oder 0 stehen. Y¹ und Y² stehen unabhängig voneinander für O, N oder NH. R⁵ bezeichnet eine C₃-C₂₃-Alk(en)ylkette. X ist ein Gegenion, das bevorzugt aus der Gruppe der Alkylsulfate und Alkylcarbonate ausgewählt ist. Besonders bevorzugt sind Kationtenside, bei denen die Stickstoff-Gruppe mit zwei langen Acyl- und zwei kurzen Alk(en)yl-Resten substituiert ist.

Amphotere oder ampholytische Tenside weisen mehrere funktionelle Gruppen auf, die in wäßriger Lösung ionisieren können und dabei - je nach Bedingungen des Mediums - den Verbindungen anionischen oder kationischen Charakter verleihen. In der Nähe des isoelektrischen Punktes bilden die Amphotenside innere Salze, wodurch sie in Wasser schwer- oder unlöslich werden können. Amphotenside werden in Ampholyte und Betaine unterteilt, wobei letztere in Lösung als Zwitterionen vorliegen. Ampholyte sind amphotere Elektrolyte, d. h. Verbindungen, die sowohl saure als auch basische hydrophile Gruppen besitzen und sich also je nach Bedingung sauer oder basisch verhalten. Als Betaine bezeichnet man Verbindungen mit der Atomgruppierung R₃N⁺-CH₂-COO⁻, die typische Eigenschaften von Zwitterionen zeigen.

Als nichtionische Tenside werden vorzugsweise alkoxylierte und/oder propoxylierte, insbesondere primäre Alkohole mit vorzugsweise 8 bis 18 C-Atomen und durchschnittlich 1 bis 12 Mol Ethylenoxid (EO) und/oder 1 bis 10 Mol Propylenoxid (PO) pro Mol Alkohol eingesetzt. Besonders bevorzugt sind C₈-C₁₆-Alkoholalkoxylate, vorteilhafterweise ethoxylierte und/oder propoxylierte C₁₀-C₁₅-Alkoholalkoxylate, insbesondere C₁₂-C₁₄-Alkoholalkoxylate, mit einem Ethoxylierungsgrad zwischen 2 und 10, vorzugsweise zwischen 3 und 8, und/oder einem Propoxylierungsgrad zwischen 1 und 6, vorzugsweise zwischen 1,5 und 5. Die angegebenen Ethoxylierungs- und Propoxylierungsgrade stellen statistische Mittelwerte dar, die für ein spezielles Produkt eine ganze oder eine gebrochene Zahl sein können. Bevorzugte Alkoholethoxylate und -propoxylate weisen eine eingeengte Homologenverteilung auf (narrow range ethoxylates/propoxylates, NRE/NRP). Zusätzlich zu diesen nichtionischen Tensiden können auch Fettalkohole mit mehr als 12 EO eingesetzt werden. Beispiele hierfür sind (Talg-) Fettalkohole mit 14 EO, 16 EO, 20 EO, 25 EO, 30 EO oder 40 EO.

Außerdem können als weitere nichtionische Tenside auch Alkylglycoside der allgemeinen Formel RO(G)ₓ, z. B. als Compounds, besonders mit anionischen Tensiden, eingesetzt werden, in der R einen primären geradkettigen oder methylverzweigten, insbesondere in 2-Stellung methylverzweigten aliphatischen Rest mit 8 bis 22, vorzugsweise 12 bis 18 C-Atomen bedeutet und G das Symbol ist, das für eine Glycoseeinheit mit 5 oder 6 C-Atomen, vorzugsweise für Glucose, steht. Der Oligomerisierungsgrad x, der die Verteilung von Monoglycosiden und Oligoglycosiden angibt, ist eine beliebige Zahl zwischen 1 und 10; vorzugsweise liegt x bei 1,1 bis 1,4.

Eine weitere Klasse bevorzugt eingesetzter nichtionischer Tenside, die entweder als alleiniges nichtionisches Tensid oder in Kombination mit anderen nichtionischen Tensiden, insbesondere zusammen mit alkoxylierten Fettalkoholen und/oder Alkylglycosiden, eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester, wie sie beispielsweise in der japanischen Patentanmeldung JP-A-58/217 598 beschrieben sind oder die vorzugsweise nach dem in der internationalen Patentanmeldung WO-A-90/13533 beschriebenen Verfahren hergestellt werden. Besonders bevorzugt sind C₁₂-C₁₈-Fettsäuremethylester mit durchschnittlich 3 bis 15 EO, insbesondere mit durchschnittlich 5 bis 12 EO.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Als weitere Tenside kommen sogenannte Gemini-Tenside in Betracht. Hierunter werden im allgemeinen solche Verbindungen verstanden, die zwei hydrophile Gruppen und zwei hydrophobe Gruppen pro Molekül besitzen. Diese Gruppen sind in der Regel durch einen sogenannten "Spacer" voneinander getrennt. Dieser Spacer ist in der Regel eine Kohlenstoffkette, die lang genug sein sollte, daß die hydrophilen Gruppen einen ausreichenden Abstand haben, damit sie unabhängig voneinander agieren können. Derartige Tenside zeichnen sich im allgemeinen durch eine ungewöhnlich geringe kritische Micellkonzentration und die Fähigkeit, die Oberflächenspannung des Wassers stark zu reduzieren, aus. In Ausnahmefällen werden jedoch unter dem Ausdruck Gemini-Tenside nicht nur dimere, sondern auch trimere Tenside verstanden.

Geeignete Gemini-Tenside sind beispielsweise sulfatierte Hydroxymischether gemäß der deutschen Patentanmeldung DE-A-43 21 022 oder Dimeralkohol-bis- und Trimeralkoholtris-sulfate und -ethersulfate gemäß der internationalen Patentanmeldung WO-A-96/23768. Endgruppenverschlossene dimere und trimere Mischether gemäß der deutschen Patentanmeldung DE-A-195 13 391 zeichnen sich insbesondere durch ihre Bi- und Multifunktionalität aus. So besitzen die genannten endgruppenverschlossenen Tenside gute Netzeigenschaften und sind dabei schaumarm, so daß sie sich insbesondere für den Einsatz in maschinellen Wasch- oder Reinigungsverfahren eignen.

Eingesetzt werden können aber auch Gemini-Polyhydroxyfettsäureamide oder Poly-Polyhydroxyfettsäureamide, wie sie in den internationalen Patentanmeldungen WO-A-95/19953, WO-A-95/19954 und WO95-A-/19955 beschrieben werden.

Die Menge an in den erfindungsgemäßen Mitteln enthaltenen Tensiden beträgt vorzugsweise 0,1 Gew.-% bis 50 Gew.-%, insbesondere 10 Gew.-% bis 40 Gew.-%, und besonders bevorzugt 20 Gew.-% bis 70 Gew.-%. Bevorzugt werden nur Mischungen aus anionischen und nichtionischen Tensiden eingesetzt.

Als organische Lösungsmittel können vorzugsweise Polydiole, Ether, Alkohole, Ketone, Amide und/oder Ester, in Mengen von 0 bis 90 Gew.-%, vorzugsweise 0,1 bis 70 Gew.-%, insbesondere 0,1 bis 60 Gew.-%, jeweils bezogen auf die vorhandene Wassermenge, eingesetzt werden. Bevorzugt sind niedermolekulare polare Substanzen, wie beispielsweise Methanol, Ethanol, Propylencarbonat, Aceton, Acetonylaceton, Diacetonalkohol, Ethylacetat, 2-Propanol, Ethylenglykol, Propylenglykol, Glycerin, Diethylenglykol, Dipropylenglycolmonomethylether und Dimethylformamid bzw. deren Mischungen.

Als Enzyme kommen insbesondere solche aus der Klasse der Hydrolasen, wie der Proteasen, Esterasen, Lipasen bzw. lipolytisch wirkenden Enzyme, Amylasen, Cellulasen bzw. andere Glycosylhydrolasen und Gemische der genannten Enzyme in Frage. Alle diese Hydrolasen tragen in der Wäsche zur Entfernung von Verfleckungen, wie protein-, fett-oder stärkehaltigen Verfleckungen, und Vergrauungen bei. Cellulasen und andere Glycosylhydrolasen können durch das Entfernen von Pilling und Mikrofibrillen zur Farberhaltung und zur Erhöhung der Weichheit des Textils beitragen. Zur Bleiche beziehungsweise zur Hemmung der Farbübertragung können auch Oxidoreduktasen eingesetzt werden.

Besonders gut geeignet sind aus Bakterienstämmen oder Pilzen, wie Bacillus subtilis, Bacillus licheniformis, Streptomyces griseus und Humicola insolens gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch protease- und/oder lipasehaltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, Iso-Amylasen, Pullulanasen und Pektinasen. Als Cellulasen werden vorzugsweise Cellobiohydrolasen, Endoglucanasen und β-Glucosidasen, die auch Cellobiasen genannt werden, bzw. Mischungen aus diesen eingesetzt. Da sich die verschiedenen Cellulase-Typen durch ihre CMCase- und Avicelase-Aktivitäten unterscheiden, können durch gezielte Mischungen der Cellulasen die gewünschten Aktivitäten eingestellt werden.

Der Anteil der Enzyme beziehungsweise Enzymmischungen kann beispielsweise etwa 0,1 bis 5 Gew.-%, vorzugsweise 0,1 bis etwa 3 Gew.-% betragen. Sie werden in erfindungsgemäßen Mitteln vorzugsweise in Teilchenform konfektioniert eingesetzt.

Als weitere Waschmittelbestandteile können Builder, Cobuilder, Soil repellents, alkalische Salze sowie Schauminhibitoren, Komplexbildner, Enzymstabilisatoren, Vergrauungsinhibitoren, optische Aufheller und UV-Absorber enthalten sein.

Als Builder kann beispielsweise feinkristalliner, synthetischer und gebundenes Wasser enthaltender Zeolith eingesetzt werden, vorzugsweise Zeolith A und/oder P. Als Zeolith P wird beispielsweise Zeolith MAP^{®} (Handelsprodukt der Firma Crosfield) besonders bevorzugt. Geeignet sind jedoch auch Zeolith X sowie Mischungen aus A, X und/oder P. Von besonderem Interesse ist auch ein cokristallisiertes Natrium/Kalium-Aluminiumsilicat aus Zeolith A und Zeolith X, welches als VEGOBOND AX^{®}(Handelsprodukt der Firma Condea) im Handel erhältlich ist. Der Zeolith kann vorzugsweise als sprühgetrocknetes Pulver zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen. Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser. Daneben können auch Phosphate als Buildersubstanzen eingesetzt werden.

Geeignete Substitute bzw. Teilsubstitute für Phosphate und Zeolithe sind kristalline, schichtförmige Natriumsilicate der allgemeinen Formel NaMSiₓO₂ₓ₊₁ y H₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilicate werden beispielsweise in der europäischen Patentanmeldung EP-A-0 164 514 beschrieben. Bevorzugte kristalline Schichtsilicate der angegebenen Formel sind solche, in denen M für Natrium steht und x die Werte 2 oder 3 annimmt. Insbesondere sind sowohl β- als auch δ-Natriumdisilicate Na₂Si₂O₅ · y H₂O bevorzugt, wobei β-Natriumdisilicat beispielsweise nach dem Verfahren erhalten werden kann, das in der internationalen Patentanmeldung WO-A-91/08171 beschrieben ist.

Zu den bevorzugten Buildersubstanzen gehören auch amorphe Natriumsilikate mit einem Modul Na₂O : SiO₂ von 1 : 2 bis 1 : 3,3, vorzugsweise von 1 : 2 bis 1 : 2,8 und insbesondere von 1 : 2 bis 1 : 2,6, welche löseverzögert sind und Sekundärwascheigenschaften aufweisen. Die Löseverzögerung gegenüber herkömmlichen amorphen Natriumsilicaten kann dabei auf verschiedene Weise, beispielsweise durch Oberflächenbehandlung, Compoundierung, Kompaktierung/Verdichtung oder durch Übertrocknung hervorgerufen worden sein. Im Rahmen dieser Erfindung wird unter dem Begriff "amorph" auch "röntgenamorph" verstanden. Dies heißt, daß die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Derartige sogenannte röntgenamorphe Silikate, welche ebenfalls eine Löseverzögerung gegenüber den herkömmlichen Wassergläsern aufweisen, werden beispielsweise in der deutschen Patentanmeldung DE-A-44 00 024 beschrieben. Insbesondere bevorzugt sind verdichtete/kompaktierte amorphe Silikate, compoundierte amorphe Silikate und übertrocknete röntgenamorphe Silikate.

Auch ein Einsatz der allgemein bekannten Phosphate als Buildersubstanzen ist möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate. Ihr Gehalt beträgt im allgemeinen nicht mehr als 25 Gew.-%, vorzugsweise nicht mehr als 20 Gew.-%, jeweils bezogen auf das fertige Mittel. In einigen Fällen hat es sich gezeigt, daß insbesondere Tripolyphosphate schon in geringen Mengen bis maximal 10 Gew.-%, bezogen auf das fertige Mittel, in Kombination mit anderen Buildersubstanzen zu einer synergistischen Verbesserung des Sekundärwaschvermögens führen. Bevorzugte Mengen an Phosphaten liegen unter 10 Gew.-%, besonders bevorzugt bei 0 Gew.-%.

Als Cobuilder brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA) und deren Abkömmlinge sowie Mischungen aus diesen. Bevorzugte Salze sind die Salze der Polycarbonsäuren wie Citronensäure, Adipinsäure, Bemsteinsäure, Glutarsäure, Weinsäure, Zuckersäuren und Mischungen aus diesen.

Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Werts von Wasch-oder Reinigungsmitteln. Insbesondere sind hierbei Citronensäure, Bernsteinsäure, Glutarsäure, Adipinsäure, Gluconsäure und beliebige Mischungen aus diesen zu nennen. Weitere einsetzbare Säuerungsmittel sind bekannte pH-Regulatoren wie Natriumhydrogencarbonat und Natriumhydrogensulfat.

Als Builder sind weiter polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70 000 g / mol.

Bei den für polymere Polycarboxylate angegebenen Molmassen handelt es sich im Sinne dieser Schrift um gewichtsmittlere Molmassen M_{w} der jeweiligen Säureform, die grundsätzlich mittels Gelpermeationschromatographie (GPC) bestimmt wurden, wobei ein UV-Detektor eingesetzt wurde. Die Messung erfolgte dabei gegen einen externen Polyacrylsäure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsulfonsäuren gemessenen Molmassen sind in der Regel deutlich höher als die in dieser Schrift angegebenen Molmassen.

Geeignete Polymere sind insbesondere Polyacrylate, die bevorzugt eine Molekülmasse von 2 000 bis 20 000 g / mol aufweisen. Aufgrund ihrer überlegenen Löslichkeit können aus dieser Gruppe wiederum die kurzkettigen Polyacrylate, die Molmassen von 2 000 bis 10 000 g / mol, und besonders bevorzugt von 3 000 bis 5 000 g / mol, aufweisen, bevorzugt sein.

Geeignete Polymere können auch Substanzen umfassen, die teilweise oder vollständig aus Einheiten aus Vinylalkohol oder dessen Derivaten bestehen.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2 000 bis 70 000 g / mol, vorzugsweise 20 000 bis 50 000 g / mol und insbesondere 30 000 bis 40 000 g / mol. Die (co-)polymeren Polycarboxylate können entweder als wäßrige Lösung oder vorzugsweise als Pulver eingesetzt werden.

Zur Verbessung der Wasserlöslichkeit können die Polymere auch Allylsulfonsäuren, wie beispielsweise Allyloxybenzolsulfonsäure und Methallylsulfonsäure, als Monomer enthalten.

Insbesondere bevorzugt sind auch biologisch abbaubare Polymere aus mehr als zwei verschiedenen Monomereinheiten, beispielsweise solche, die gemäß der DE-A-43 00 772 als Monomere Salze der Acrylsäure und der Maleinsäure sowie Vinylalkohol bzw. Vinylalkohol-Derivate oder gemäß der DE-C-42 21 381 als Monomere Salze der Acrylsäure und der 2-Alkylallylsulfonsäure sowie Zuckerderivate enthalten.

Weitere bevorzugte Copolymere sind solche, die in den deutschen Patentanmeldungen DE-A-43 03 320 und DE-A-44 17 734 beschrieben werden und als Monomere vorzugsweise Acrolein und Acrylsäure/Acrylsäuresalze bzw. Acrolein und Vinylacetat aufweisen.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, beispielsweise wie in der europäischen Patentanmeldung EP-A-0.280 223 beschrieben, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500 000 g / mol. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2 000 bis 30 000 g / mol. Ein bevorzugtes Dextrin ist in der britischen Patentanmeldung 94 19 091 beschrieben.

Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Derartige oxidierte Dextrine und Verfahren ihrer Herstellung sind beispielsweise aus den europäischen Patentanmeldungen EP-A-0 232 202, EP-A-0 427 349, EP-A-0 472 042 und EP-A-0 542 496 sowie den internationalen Patentanmeldungen WO-A-92/18542, WO-A-93/08251, WO-A-93/16110, WO-A-94/28030, WO-A-95/07303, WO-A-95/12619 und WO-A-95/20608 bekannt. Ebenfalls geeignet ist ein oxidiertes Oligosaccharid gemäß der deutschen Patentanmeldung DE-A-196 00 018. Ein an C₆ des Saccharidrings oxidiertes Produkt kann besonders vorteilhaft sein.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS), dessen Synthese beispielsweise in US 3,158,615 beschrieben wird, bevorzugt in Form seiner Natrium- oder Magnesiumsalze verwendet. Weiterhin bevorzugt sind in diesem Zusammenhang auch Glycerindisuccinate und Glycerintrisuccinate, wie sie beispielsweise in den US-amerikanischen Patentschriften US 4,524,009, US 4,639,325, in der europäischen Patentanmeldung EP-A-0 150 930 und der japanischen Patentanmeldung JP-A-93/339 896 beschrieben werden. Geeignete Einsatzmengen liegen in zeolithhaltigen und/oder silicathaltigen Formulierungen bei 3 bis 15 Gew.-%.

Weitere brauchbare organische Cobuilder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten. Derartige Cobuilder werden beispielsweise in der internationalen Patentanmeldung WO 95/20029 beschrieben.

Zusätzlich können die Mittel auch Komponenten enthalten, welche die Öl- und Fettauswaschbarkeit aus Textilien positiv beeinflussen, sogenannte Soil repellents. Dieser Effekt wird besonders deutlich, wenn ein Textil verschmutzt wird, das bereits vorher mehrfach mit einem erfindungsgemäßen Waschmittel, das diese öl- und fettlösende Komponente enthält, gewaschen wurde. Zu den bevorzugten öl- und fettlösenden Komponenten zählen beispielsweise nichtionische Celluloseether wie Methylcellulose und Methylhydroxypropylcellulose mit einem Anteil an Methoxylgruppen von 15 bis 30 Gew.-% und an Hydroxypropoxylgruppen von 1 bis 15 Gew.-%, jeweils bezogen auf den nichtionischen Celluloseether, sowie die aus dem Stand der Technik bekannten Polymere der Phthalsäure und/oder der Terephthalsäure bzw. von deren Derivaten, insbesondere Polymere aus Ethylenterephthalaten und/oder Polyethylenglycolterephthalaten oder anionisch und/oder nichtionisch modifizierten Derivaten von diesen. Besonders bevorzugt von diesen sind die sulfonierten Derivate der Phthalsäure- und der Terephthalsäure-Polymere.

Beim Einsatz in maschinellen Waschverfahren kann es von Vorteil sein, den Mitteln übliche Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bistearylethylendiamid. Mit Vorteilen werden auch Gemische aus verschiedenen Schauminhibitoren verwendet, z.B. solche aus Siliconen, Paraffinen oder Wachsen.

Als Komplexbildner bzw. als Stabilisatoren insbesondere für Enzyme, die empfindlich gegen Schwermetallionen sind, kommen die Salze von Polyphosphonsäuren in Betracht. Hier werden vorzugsweise die Natriumsalze von beispielsweise 1-Hydroxyethan-1,1-diphosphonat, aber auch Diethylentriaminpentamethylenphosphonat oder Ethylendiamintetramethylenphosphonat in Mengen von 0,1 Gew.-% bis 5 Gew.-% des Mittels verwendet. Bevorzugt sind stickstoffreie Komplexbildner.

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise die wasserlöslichen Salze (co-)polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z. B. abgebaute Stärke, Aldehydstärken usw. Auch Polyvinylpyrrolidon ist brauchbar. Bevorzugt werden jedoch Celluloseether, wie Carboxymethylcellulose (Na-Salz), Methylcellulose, Hydroxyalkylcellulose und Mischether, wie Methylhydroxyethyl-cellulose, Methylhydroxypropylcellulose, Methylcarboxymethylcellulose und deren Gemische, sowie Polyvinylpyrrolidon beispielsweise in Mengen von 0,1 bis 5 Gew.-%, bezogen auf die Mittel, eingesetzt.

Die Mittel können optische Aufheller wie z. B. Derivate der Diaminostilbendisulfonsäure bzw. deren Alkalimetallsalze enthalten. Geeignet sind z. B. Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, z.B. die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten Aufheller können verwendet werden.

Daneben können auch UV-Absorber eingesetzt werden. Dies sind Verbindungen mit ausgeprägtem Absorptionsvermögen für Ultraviolettstrahlung, die als Lichtschutzmittel (UV-Stabilisatoren) sowohl zur Verbesserung der Lichtbeständigkeit von Farbstoffen und Pigmenten sowie von Textilfasern beitragen und auch die Haut des Trägers von Textilprodukten vor durch das Textil dringender UV-Einstrahlung schützen. Im allgemeinen handelt es sich bei den durch strahlungslose Desaktivierung wirksamen Verbindungen um Derivate des Benzophenons, dessen Substituenten wie Hydroxy-und/oder Alkoxy-Gruppen sich meist in 2- und/oder 4-Stellung befinden. Des weiteren sind auch substituierte Benzotriazole geeignet, ferner in 3-Stellung phenyl substituierte Acrylate (Zimtsäurederivate), gegebenenfalls mit Cyanogruppen in 2-Stellung, Salicylate, organische Nickel-Komplexe sowie Naturstoffe wie Umbelliferon und die körpereigene Urocansäure. In einer bevorzugten Ausführungsform absorbieren die UV-Absorber UV-A und UV-B-Strahlung sowie gegebenenfalls UV-C-Strahlung und strahlen mit Wellenlängen blauen Lichts zurück, so daß sie zusätzlich die Wirkung eines optischen Aufhellers haben. Bevorzugte UV-Absorber sind auch die in den europäischen Patentanmeldungen EP-A-0 374 751, EP-A-0 659 877, EP-A-0 682 145, EP-A-0 728 749 und EP-A-0 825 188 offenbarten UV-Absorber wie Triazinderivate, z. B. Hydroxyaryl-1,3,5-triazin, sulfoniertes 1,3,5-Triazin, o-Hydroxyphenylbenzotriazol und 2-Aryl-2H-benzotriazol sowie Bis(anilinotriazinylamino)stilbendisulfonsäure und deren Derivate. Als UV-Absorber können auch ultraviolette Strahlung absorbierende Pigmente wie Titandioxid eingesetzt werden.

Die Mittel können gewünschtenfalls Verdickungsmittel und Anti-Absetzmittel sowie Viskositätsregulatoren wie Polyacrylate, Polycarbonsäuren, Polysaccharide und deren Derivate, Polyurethane, Polyvinylpyrrolidone, Rizinusölderivate, Polyaminderivate wie quaternisierte und/oder ethoxylierte Hexamethylendiamine sowie beliebige Mischungen hiervon, enthalten. Auch Elektrolyte können zur Viskositätserhöhung erfindungsgemäßer flüssiger Mittel verwendet werden, wobei der Einsatz von Magnesiumsulfat besonders bevorzugt ist. Magnesiumsulfat kann in erfindungsgemäßen Mitteln gewünschtenfalls in Mengen bis zu 30 Gew.-% vorhanden sein. Bevorzugt sind Mengen im Bereich von 3 Gew.-% bis 20 Gew.-%, insbesondere im Bereich von 6 Gew.-% bis 10 Gew.-%, wobei auch Mischungen von Magnesiumsulfat mit Natrium- und/oder Kaliumsulfat eingesetzt werden können. Bevorzugte Mittel weisen bei Messungen mit einem Brookfield-Viskosimeter bei einer Temperatur von 20 °C und einer Scherrate von 20 min⁻¹ eine Viskosität zwischen 100 und 10 000 mPa·s auf.

Die Mittel können weitere typische Wasch- und Reinigungsmittelbestandteile wie Parfüme und/oder Farbstoffe enthalten, wobei solche Farbstoffe bevorzugt sind, die keine oder vernachlässigbar geringe färbende Wirkung auf die zu waschenden Textilien haben. Bevorzugte Mengenbereiche der Gesamtheit der eingesetzten Farbstoffe liegen unter 1 Gew.-%, vorzugsweise unter 0,1 Gew.-%, bezogen auf das Mittel. Die Mittel können gegebenenfalls auch Weißpigmente wie z. B. TiO₂ enthalten.

Bevorzugte Mittel weisen Dichten von 0,5 bis 2,0 g / cm³, insbesondere 0,7 bis 1,5 g / cm³, auf. Die Dichtedifferenz zwischen den umhüllten Imidoperoxocarbonsäureteilchen und der flüssigen Phase des Mittels beträgt vorzugsweise nicht mehr als 10 % der Dichte einer der beiden und ist insbesondere so gering, daß die umhüllten Imidoperoxocarbonsäureteilchen und vorzugsweise auch gegebenenfalls sonstige in den Mitteln enthaltene Feststoffpartikel in der Flüssigphase schweben.

### Beispiele

### Herstellung eines beschichteten PAP-Granulats (E)

Als Kern wurde kommerziell verfügbares 6-Phthalimidoperoxohexansäure-Granulat "EURECO®-Granulat" von Solvay Solexis / Bussi / Italien eingesetzt. Dieses wurde zunächst auf Teilchengrößten von 0,6 bis 1,2 mm abgesiebt. Ein Teil diente als Vergleichsbeispiel (V) und ein zweiter Teil wurde in einer Labor-Wirbelschichtanlage Aeromatic Fileder, die als Wurstercoater mit beheizbarer Bottom-Einsprühdüse ausgerüstet war, mit einem Coating aus Paraffin, Schmelzpunkt 57 °C bis 60 °C (Merck) mit einer Menge von 20 Gew.-% bezogen auf das Kernmaterial beschichtet.

### Beispiel 1: Herstellung eines erfindungsgemäßen Flüssigwaschmittels

Es wurde ein erfindungsgemäßes flüssiges Vollwaschmittel (mit Granulat E aus Beispiel 1) sowie eine Vergleichsrezeptur (mit Granulat V) der folgenden Zusammensetzungen (jeweils Gewichtsprozent) hergestellt:
16,5 % Na-Alkylbenzolsulfonat (Cognis)
10 % 7 fach ethoxylierter Fettalkohol (Dehydol® LT 7, Cognis)
1 % Komplexbildner (Sequion® 10 H 60, Polygon Chemie)
3 % Trinatriumcitrat
8 % Natriumsulfat
3 % Granulat E bzw. Granulat V
0,25 % Xanthan Gum TGCS (Jungbunzlauer Xanthan Ges.m.b.h.)
1 % Parfüm
0,1% Silicon-Entschäumer (Wacker Chemie)
ad 100%: Wasser

Die Herstellung erfolgte, indem das Wasser in einem Rührbehälter vorgelegt wurde und dazu das Xanthan zugegeben wurde. Nach dem Quellen des Xanthans (30 min) wurde das Sulfat zugegeben. Danach erfolgte die Zugabe der Tenside und der weiteren Rohstoffe unter Rühren. Der pH-Wert wurde mit konzentrierter NaOH auf 5,0 ± 0,2 eingestellt.

### Beispiel 2: Beurteilung der Lagerstabilität des Bleichmittelgranulats

Die Lagerstabilität des Bleichmittelgranulats wurde bestimmt, indem Proben der Waschmittel aus Beispiel 1 bei einer Lagertemperatur von konstant 35 °C eingelagert wurden. Der Ausgangsgehalt an PAP und die Gehalte nach 1, 2,4 und 8 Wochen wurden mit Hilfe einer iodometrischen Titration bei einer Temperatur von 0 °C bestimmt. Die erhaltenen Werte sind in der folgenden Tabelle zusammengestellt, dabei sind die PAP-Gehalte in % bezogen auf den Ausgangswert angegeben.

| Mittel mit | 0 Wochen | 1 Woche | 2 Wochen | 4 Wochen | 8 Wochen |
|---|---|---|---|---|---|
| V | 100 | 89 | 72,5 | 44 | 16 |
| E | 100 | 99 | 91 | 69 | 38 |

Man erkennt, daß die erfindungsgemäß gecoateten Granulate E eine wesentlich bessere Lagerstabilität aufweisen als die unbeschichteten Granulate V.

## Patentansprüche

1. Wässriges tensid- und bleichmittelhaltiges flüssiges Wasch- oder Reinigungsmittel, das einen pH-Wert im Bereich von 2 und 6 aufweist und eine teilchenförmige Imidoperoxocarbonsäure enthält, **dadurch gekennzeichnet, dass** das Imidoperoxocarbonsäureteilchen eine Umhüllung aus Paraffin, das im Bereich von 40 °C bis 65 °C schmilzt, aufweist und dadurch erhältlich ist, dass man eine Wirbelschicht der zu umhüllenden Imidoperoxocarbonsäureteilchen mit einer Schmelze des Paraffins besprüht, dabei das geschmolzene Umhüllungsmaterial durch Abkühlen verfestigt und die umhüllten Imidoperoxocarbonsäureteilchen aus der Wirbelschicht austrägt, oder dadurch erhältlich ist, dass man eine Wirbelschicht der zu umhüllenden Imidoperoxocarbonsäureteilchen mit einer wäßrigen Emulsion, Dispersion oder Aufschlämmung des Paraffins besprüht, dabei das Wasser durch Verdampfen entfernt und die umhüllten Imidoperoxocarbonsäureteilchen aus der Wirbelschicht austrägt.

2. Mittel nach Anspruch 1, **dadurch gekennzeichnet, dass** es 1 Gew.-% bis 25 Gew.-%, insbesondere 2 Gew.-% bis 20 Gew.-% der teilchenförmigen Imidoperoxocarbonsäure enthält.

3. Mittel nach Anspruch 1 oder 2, **dadurch gekennzeichnet, dass** es 0,1 Gew.-% bis 50 Gew.-%, insbesondere 10 Gew.-% bis 40 Gew.-% Tensid enthält.

4. Mittel nach einem der Ansprüche 1 bis 3, **dadurch gekennzeichnet, dass** es einen pH-Wert im Bereich zwischen 3 und 5,5 aufweist.

5. Mittel nach einem der Ansprüche 1 bis 4, **dadurch gekennzeichnet, dass** die Dichten der umhüllten Imidoperoxocarbonsäureteilchen und der flüssigen Phase des Mittels um nicht mehr als 10 % voneinander abweichen.

6. Mittel nach einem der Ansprüche 1 bis 5, **dadurch gekennzeichnet, dass** die Imidoperoxocarbonsäure aus 4-Phthalimidoperoxobutansäure, 5-Phthalimidoperoxopentansäure, 6-Phthalimidoperoxohexansäure, 7-Phthalimidoperoxoheptansäure, N,N'-terephthaloyl-di-6-aminoperoxohexansäure und Mischungen aus diesen ausgewählt wird.

7. Mittel nach einem der Ansprüche 1 bis 6, **dadurch gekennzeichnet, dass** das Teilchen zu 2 Gew.-% bis 30 Gew.-%, insbesondere 5 Gew.-% bis 25 Gew.-% aus der Paraffinumhüllung besteht.

## Claims

1. An aqueous liquid washing or cleaning agent containing surfactant and bleaching agent, having a pH in the range of 2 to 6, and containing a particulate imidoperoxocarboxylic acid, **characterized in that** the imidoperoxocarboxylic acid particles have a coating of paraffin, which melt in the range of 40°C and 65°C, and is obtainable by spraying a fluidized bed of the imidoperoxocarboxylic acid particles to be coated with a melt of the paraffin, solidifying the molten coating material by cooling and discharging the coated imidoperoxocarboxylic acid particles from the fluidized bed, or is obtainable by spraying a fluidized bed of the imidoperoxocarboxylic acid particles to be coated with an aqueous emulsion, dispersion or slurry of the paraffin, removing the water by evaporation and discharging the coated imidoperoxocarboxylic acid particles from the fluidized bed.

2. The agent according to Claim 1, **characterized in that** it contains 1 wt% to 25 wt%, in particular 2 wt% to 20 wt% of the particulate imidoperoxocarboxylic acid.

3. The agent according to Claim 1 or 2, **characterized in that** it contains 0.1 wt% to 50 wt%, in particular 10 wt% to 40 wt% surfactant.

4. The agent according to any one of Claims 1 to 3, **characterized in that** it has a pH in the range of 3 and 5.5.

5. The agent according to any one of the Claims 1 to 4, **characterized in that** the densities of the coated imidoperoxocarboxylic acid particles and the liquid phase of the agent differ from one another by no more than 10%.

6. The agent according to any one of Claims 1 to 5, **characterized in that** the imidoperoxocarboxylic acid is selected from 4-phthalimidoperoxobutanoic acid, 5-phthalimidoperoxopentanoic acid, 6-phthalimidoperoxohexanoic acid, 7-phthalimidoperoxoheptanoic acid, N,N'-terephthaloyldi-6-aminoperoxohexanoic acid and mixtures thereof.

7. The agent according to any one of Claims 1 to 6, **characterized in that** the particle comprises 2 wt% to 30 wt%, in particular 5 wt% to 25 wt% of the paraffin coating.

## Revendications

1. Agent de lavage ou de nettoyage liquide aqueux contenant un ou plusieurs agents tensioactifs et un ou plusieurs agents de blanchiment, qui présente une valeur de pH dans la plage de 2 à 6 et qui contient un acide imidoperoxocarboxylique sous forme particulaire, **caractérisé en ce que** les particules d'acide imidoperoxocarboxylique présentent un enrobage de paraffine qui fond dans la plage de 40 °C à 65 °C, et que l'on obtient par aspersion d'un lit fluidisé des particules d'acide imidoperoxocarboxylique à enrober avec une masse fondue de la paraffine, on solidifie en l'occurrence par refroidissement de la matière d'enrobage fondue et on évacue hors du lit fluidisé les particules d'acide imidoperoxocarboxylique enrobées, ou bien que l'on obtient par aspersion d'un lit fluidisé des particules d'acide imidoperoxocarboxylique à enrober avec une émulsion, une dispersion ou une suspension aqueuse de la paraffine, on élimine l'eau en l'occurrence par évaporation et on évacue hors du lit fluidisé les particules d'acide imidoperoxocarboxylique enrobées.

2. Agent selon la revendication 1, **caractérisé en ce qu'**il contient de 1 % en poids à 25 % en poids, en particulier de 2 % en poids à 20 % en poids de l'acide imidoperoxocarboxylique sous forme particulaire.

3. Agent selon la revendication 1 ou 2, **caractérisé en ce qu'**il contient de 0,1 % en poids à 50 % en poids, en particulier de 10 % en poids à 40 % en poids d'un agent tensioactif.

4. Agent selon l'une quelconque des revendications 1 à 3, **caractérisé en ce qu'**il présente une valeur de pH dans la plage entre 3 et 5,5.

5. Agent selon l'une quelconque des revendications 1 à 4, **caractérisé en ce que** les densités des particules d'acide imidoperoxocarboxylique enrobées et de la phase liquide de l'agent ne diffèrent pas l'une de l'autre de plus de 10 %.

6. Agent selon l'une quelconque des revendications 1 à 5, **caractérisé en ce que** l'acide imidoperoxocarboxylique est choisi parmi l'acide 4-phtalimidoperoxobutanoïque, l'acide 5-phtalimidoperoxopentanoïque, l'acide 6-phtalimidoperoxohexanoïque, l'acide 7-phtalimidoperoxoheptanoïque, l'acide N, N'-téréphtaloyl-di-6-aminoperoxohexanoïque, ainsi que leurs mélanges.

7. Agent selon l'une quelconque des revendications 1 à 6, **caractérisé en ce que** la particule est constituée de l'enrobage de paraffine à concurrence de 2 % en poids 30 % en poids, en particulier de 5 % en poids à 25 % en poids.
